Europäisches Patentamt

European Patent Office

Office européen des brevets

(19)

(11) Numéro de publication: **0 199 656**
**B1**

(12) **FASCICULE DE BREVET EUROPEEN**

(45) Date de publication du fascicule du brevet:
16.08.89

(51) Int. Cl.⁴: **A 01 B 59/044,** A 01 B 29/00

(21) Numéro de dépôt: 86400900.6

(22) Date de dépôt: 24.04.86

(54) **Appareil perfectionné pour la préparation des sols au moyen d'un rouleau sous le tracteur et dont la pression exercée au sol est réglable, avant ou pendant le travail.**

(30) Priorité: 24.04.85 FR 8506244

(43) Date de publication de la demande:
29.10.86 Bulletin 86/44

(45) Mention de la délivrance du brevet:
16.08.89 Bulletin 89/33

(84) Etats contractants désignés:
AT BE CH DE FR GB IT LI LU NL SE

(56) Documents cités:
DE-A- 3 235 959
DE-C- 314 955
DE-C- 588 452
US-A- 3 756 203

MOTORISATION & TECHNIQUE AGRICOLE, no. 81,
septembre 1985, page 35, Paris, FR; "Informations en
direct des constructeurs"

(73) Titulaire: **Pollet, Albert, "Les Chagnoux",
F-18380 Ivoy-le-Pré (FR)**
Titulaire: **Lagogue, Hubert, Route d'Allogny,
F-18380 Mery-les-Bois (FR)**

(72) Inventeur: **Pollet, Albert, "Les Chagnoux",
F-18380 Ivoy-le-Pré (FR)**
Inventeur: **Lagogue, Hubert, Route d'Allogny,
F-18380 Mery-les-Bois (FR)**

(74) Mandataire: **Rinuy, Santarelli, 14, avenue de la Grande
Armée, F-75017 Paris (FR)**

ACTORUM AG

## Description

La présente invention concerne un appareil perfectionné pour la préparation des sols au moyen d'un rouleau sous le tracteur ayant pour effet d'aplanir le sol de façon aussi régulière que possible entre les roues d'un tracteur et dont la pression exercée au sol est préréglable, avant le début du travail et réglable également durant le travail.

Dans les appareils actuellement connus, le rouleau est soit placé à l'arrière du tracteur d'où il est tiré, mais la pression exercée par le rouleau n'est pas suffisante, ou bien y est porté par le système classique trois points du tracteur, mais, là encore, la pression exercée par le rouleau sur le sol est difficilement réglable et il y a risque d'interférence sur la motricité des roues arrière du tracteur.

On a également placé le rouleau à la partie avant du tracteur, mais, dans ce cas, pour obtenir une pression suffisante dudit rouleau sur le sol on est amené à soulever la partie avant du tracteur et de rendre le rouleau directeur en lieu et place des roues avant du tracteur, lesquelles sont alors soulevées au-dessus du sol. L'équilibrage et la répartition du poids de l'ensemble ainsi constitué sont modifiés par le porte à faux ainsi réalisé vers l'avant, ce qui, en plus, rend difficile l'adjonction à l'avant du tracteur d'un appareil complémentaire éventuellement utile. Par ailleurs, se produit un phénomène de bourrage en avant du rouleau, ce qui nuit à l'obtention d'un aplanissement optimum du sol.

On connaît aussi, d'après le document DE-3 235 959 un dispositif dont le rouleau est, dans une variante, disposé juste en arrière des roues avant, selon un dispositif toutefois très rudimentaire.

L'appareil perfectionné conforme à la présente invention obvie aux inconvénients des systèmes actuellement connus, en ce que le rouleau est placé sous le ventre du tracteur, sensiblement au voisinage du centre de gravité de ce dernier et comporte un système hydraulique de commande agencé de façon telle que la pression exercée au sol par le rouleau est obtenue par prélèvement du poids du tracteur, ce qui permet une répartition optimale des masses. Par ailleurs, le système hydraulique a la double fonction: d'une part de permettre de faire passer le rouleau, de sa position basse de travail, à sa position haute d'escamotage pour le transport et vice-versa; d'autre part, de permettre soit de prérégler la pression exercée par le rouleau sur le sol, avant le travail, et d'appliquer automatiquement cette pression de préréglage sur le rouleau, lorsque ce dernier est mis en place pour le travail au champ, soit, éventuellement, de modifier cette pression sur le rouleau pendant le travail.

L'invention propose ainsi un appareil perfectionné pour la préparation des sols au moyen d'un rouleau transversal monté sur un tracteur, destiné à aplanir le sol de façon aussi régulière que possible entre les traces des roues du tracteur, dans lequel le rouleau est tiré par un attelage relié au châssis en sorte d'être disposé sous le tracteur en arrière de ses roues avant, et est par ailleurs soumis à l'action d'un système hydraulique de manœuvre à vérins contrôlé par un système de commande agencé pour permettre au conducteur d'amener le rouleau à venir occuper, soit une position haute de transport, soit une position basse de travail pour laquelle la pression exercée au sol par le rouleau est obtenue par prélèvement du poids du tracteur, caractérisé en ce que le rouleau est situé sensiblement sous le centre de gravité du tracteur, ce qui permet une répartition optimale des masses, et en ce que le système de commande comporte un circuit d'amortissement à accumulateur d'azote relié à l'extrémité de poussée de deux vérins du système hydraulique de manœuvre agissant sur le rouleau, ce circuit comportant, outre cet accumulateur et un manomètre permettant d'en afficher la pression, une vanne adaptée à connecter en parallèle cette extrémité de poussée des vérins et cet accumulateur au distributeur de pression du tracteur grâce à quoi ce système de commande est adapté à un préréglage de la pression exercée par le rouleau sur le sol, avant le travail par ouverture de la vanne, par mise en pression du circuit d'amortissement et de l'extrémité de poussée des vérins jusqu'à obtention d'une pression désirée, puis fermeture de la vanne, ainsi qu'à une application automatique de cette pression de préréglage sur le rouleau lorsque ce dernier est mis en place sur le sol pour le travail au sol, l'accumulateur emmagasinant l'huile refoulée à l'extrémité de poussée des vérins en position haute de transport, et la restituant à cette extrémité en position basse.

Selon des dispositions préférées de l'invention:

– le rouleau est logé dans un cadre rectangulaire disposé transversalement et sous le ventre du tracteur, dont le côté avant s'articule sur deux brancards latéraux venant s'articuler eux-mêmes, à leur extrémité avant, sur la partie avant du châssis du tracteur, et dont les extrémités arrières sont reliées, au moyen d'amortisseurs latéraux, avec le côté arrière libre du cadre portant le rouleau, ledit rouleau étant ainsi tiré par le tracteur et disposé sous le ventre de ce dernier, sensiblement au voisinage inférieur du centre de gravité dudit tracteur;

– l'ensemble hydraulique de manœuvre est constitué de deux vérins latéraux double effet articulés d'une part, à l'une de leurs extrémités sur un élément adéquat du tracteur, d'autre part, à l'autre extrémité sur lesdits brancards sur lesquels s'articule le côté avant du cadre porte rouleau; et

– le système de commande, à la disposition du conducteur du tracteur, des deux vérins de l'ensemble hydraulique de manœuvre, comporte un circuit amortisseur à accumulateur d'azote.

D'autres caractéristiques, avantages et particularités de la présente invention ressortiront de la description qui en est donnée ci-après en référence aux dessins annexés, représentant, schématiquement et simplement à titre d'exemple, une forme de réalisation possible de ladite invention.

Sur ces dessins:

– la Figure 1 est une vue en élévation d'un appareil pour la préparation des sols conforme à l'invention, monté en place sur le châssis d'un tracteur, dans la position qu'il occupe, soit lors de la mise en pression du circuit d'amortissement à accumulateur à azote avant le début du travail, soit lors du travail au champ. Il est à noter que, pour la clarté du dessin, le tracteur n'a été représenté que par son encombrement en trait mixte;

– la Figure 2 est une vue en élévation analogue à la précédente, mais l'appareil étant cette fois représenté dans la position qu'il occupe lorsque le rouleau est escamoté en position haute pour le transport;

– la Figure 3 est une vue de détail en perspective à plus grande échelle, avec arrachement partiel, de la partie arrière droite du rouleau et de son système de suspension;

– la Figure 4 est une vue de l'avant en bout du rouleau, la partie antérieure des longerons que l'on distingue sur la figure 3 n'étant pas représentée, cette fois, pour la clarté du dessin;

– les Figures 5, 6 et 7 sont des schémas explicatifs du fonctionnement du système de commande de l'ensemble hydraulique de manœuvre, durant trois phases différentes, à savoir: a) durant la mise en pression du circuit d'amortissement à accumulateur à azote, avant le début du travail, phase schématisée sur la Figure 5; b) durant la remontée en position d'escamotage du rouleau, pour le transport, phase schématisée sur la Figure 6; c) durant la mise en place du rouleau pour le travail au champ, phase schématisée sur la Figure 7.

L'appareil à rouleau escamotable pour la préparation des sols et dont la pression exercée par le rouleau sur le sol est réglable avant ou pendant le travail, qui est représenté à titre d'exemple sur les dessins est essentiellement constitué:

1° d'un rouleau proprement dit désigné par la référence générale 1 dont l'essieu 2 est fixé à ses extrémités sur un cadre métallique rectangulaire 3 disposé transversalement et sous le châssis du tracteur.

2° d'un attelage à deux brancards, désigné par la référence générale 4, dont les extrémités avant s'articulent en 5 sur les longerons 6 du châssis du tracteur 7 et dont la partie arrière 8 sert de berceau à suspension élastique, sur les détails duquel on reviendra en détail plus loin, à l'ensemble rouleau 1 – cadre 3.

Il est à noter que suivant une caractéristique essentielle de la présente invention, l'ensemble rouleau-attelage précité est agencé sous le ventre du tracteur 7 du façon que le rouleau 1 soit disposé sous le tracteur et au voisinage du centre de gravité de ce dernier, étant important de préciser que la pression exercée au sol par le rouleau est obtenue par prélèvement du poids du tracteur, ce qui permet une répartition optimale des masses.

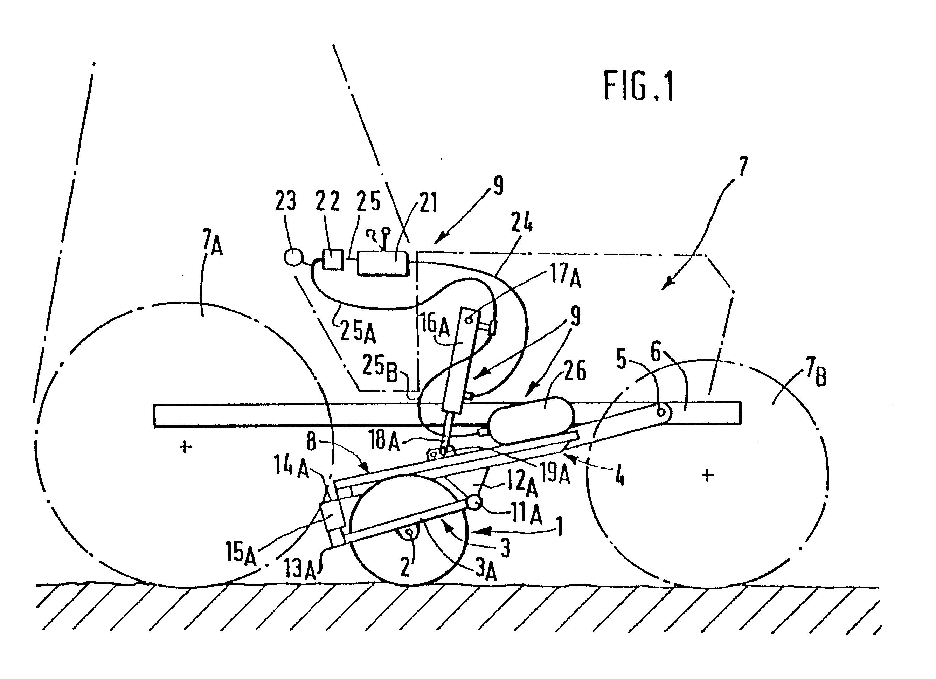

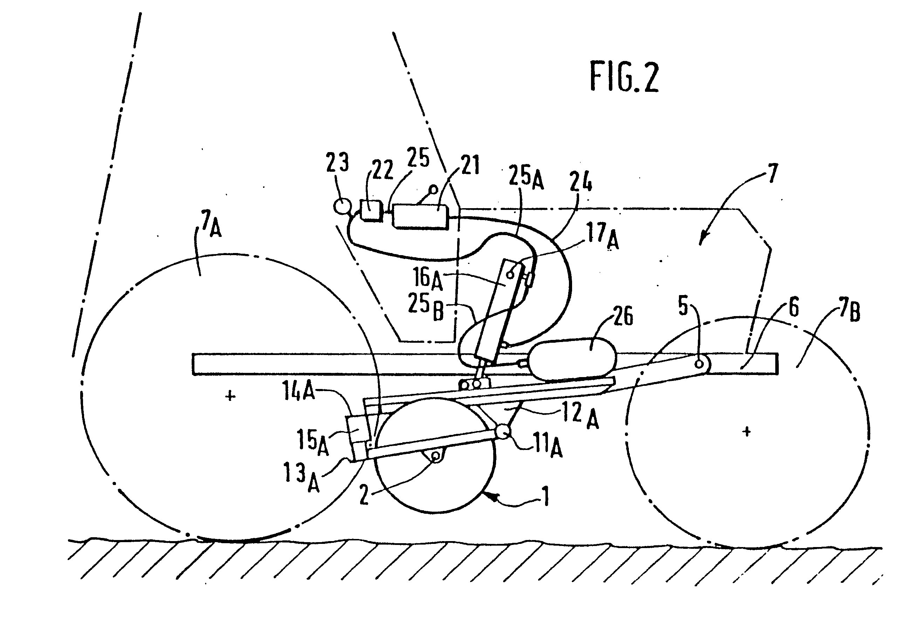

3° d'un ensemble hydraulique et son système de commande désigné par la référence générale 9 ayant, suivant une autre caractéristique essentielle de l'invention, une double fonction, à savoir: a) permettre à l'ensemble rouleau 1 – attelage 4 d'occuper soit la position basse de travail représentée sur la Figure 1, soit la position haute d'escamotage pour le transport représentée sur la Figure 2; b) permettre de prérégler la mise en pression du circuit d'amortissement à accumulateur d'azote, avant le début de travail, et d'appliquer automatiquement cette pression de préréglage sur le rouleau, lorsque ce dernier est mis en place sur le sol pour le travail au champ ou encore de régler éventuellement la pression exercée au sol par le rouleau, durant le travail.

En se référant, tout d'abord aux Figures 1 à 4, on voit que le rouleau 1 est constitué en l'occurrence de cinq roues à pneumatiques $1_A$, $1_B$, $1_C$, $1_D$, et $1_E$ calées sur un axe commun 2 dont les extrémités sont montées dans des roulements $10_A$ et $10_B$ fixés à la partie inférieure des côtés latéraux $3_A$ et $3_B$ du cadre rectangulaire 3. Le côté avant $3_C$ dudit cadre est monté de façon à pouvoir pivoter autour d'axes d'articulation $11_A$, $11_B$ agencés sur des supports $12_A$, $12_B$ fixés à la partie inférieure des brancards latéraux $4_A$ et $4_B$ dont les extrémités avant viennent s'articuler, comme on l'a vu précédemment, en 5 sur les longerons 6 du châssis du tracteur 7.

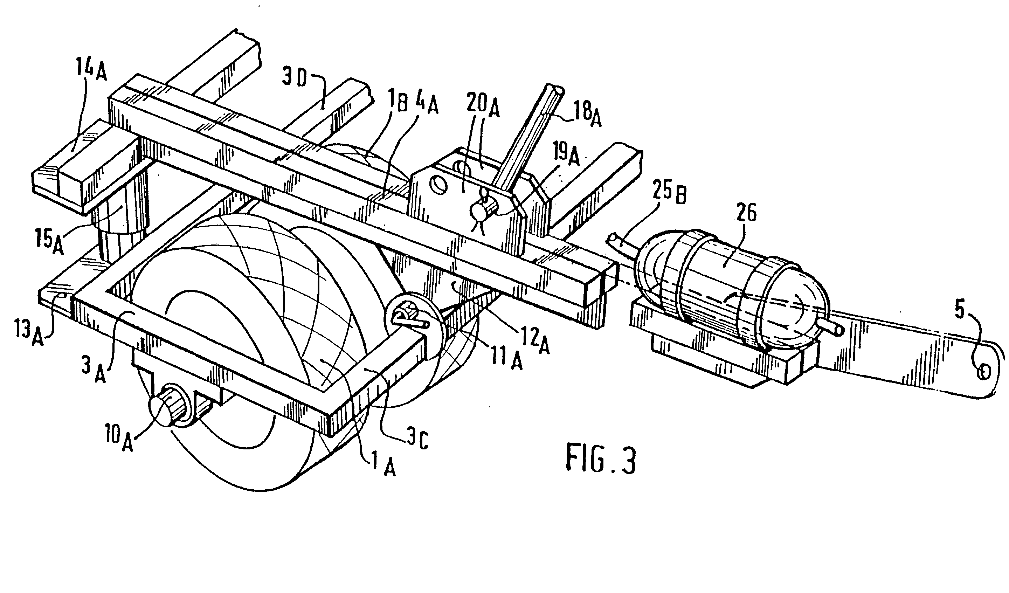

Par ailleurs, comme cela apparaît distinctement sur la figure 3, le côté arrière $3_D$ du cadre 3 comporte, à chacune de ses extrémités, une plaque support telle que $13_A$ tandis que l'extrémité arrière du brancard correspondant $4_A$ comporte également, en regard de la plaque $13_A$, une plaque support telle que $14_A$. Entre ces plaques-supports $13_A$ et $14_A$ est agencé un ensemble amortisseur tel que $15_A$. Il est évidemment de même à l'autre extrémité arrière latérale du cadre et à celle du brancard correspondant.

L'ensemble rouleau-attelage que l'on vient de décrire, qui est ainsi tiré par le tracteur à partir des points d'articulation antérieure 5 (de façon que, comme cela a été souligné précédemment, le rouleau 1 prenne appui sur le sol, sensiblement au voisinage du centre de gravité du tracteur, c'est-à-dire soit plus proche de l'essieu des roues arrière $7_A$ que de l'essieu des roues avant $7_B$) est par ailleurs, suivant une autre caractéristique de l'invention, soumis à l'action de l'ensemble hydraulique de manœuvre et de son système de commande.

Suivant la forme de réalisation représentée à titre d'exemple sur les dessins, l'ensemble hydraulique de manœuvre est avantageusement constitué, de chaque côté du tracteur, par un vérin hydraulique double effet $15_A$–$16_B$ articulé à son extrémité supérieure sur un axe $17_A$–$17_B$ solidaire du tracteur 7. L'extrémité libre de la tige de manœuvre $18_A$–$18_B$ du vérin s'articule, pour sa part, sur un axe $19_A$–$19_B$ fixé dans des orifices de deux plaques de support $20_A$–$20_B$ soudées à la partie supérieure du brancard d'attelage $4_A$–$4_B$, sensiblement en regard de l'axe $11_A$–$11_B$ sur lequel s'articule le côté avant $3_C$ du cadre 3 supportant le rouleau $1_A$... $1_E$.

On a vu précédemment que l'ensemble hydraulique de manœuvre 9 avait une double fonction.

La première fonction apparaît clairement en comparant les figures 1 et 2.

On voit en effet qu'il suffit d'actionner les vérins double effet $16_A$–$16_B$ vers le haut pour faire pivoter l'ensemble attelage 4 – rouleau 1, autour de l'axe 5, vers le haut et passer ainsi de la position de travail de la figure 1, à la position d'escamotage du rouleau pour le transport de la figure 2.

Bien évidemment, on passe de la position d'escamotage du rouleau de la figure 2 à la position de travail au sol de la figure 1, en actionnant les vérins 16$_A$–16$_B$ vers le bas.

Conformément à une autre caractéristique essentielle de la présente invention, l'ensemble hydraulique de manœuvre est soumis à un système de commande agencé de façon à pouvoir remplir une deuxième fonction en ce qu'il permet de prérégler la mise en pression du circuit d'amortissement à accumulateur d'azote, avant le début du travail et d'appliquer automatiquement cette pression de préréglage sur le rouleau, lorsque ce dernier est mis en place pour le travail au champ.

Lorsque le rouleau 1 vient de la position d'escamotage de la figure 2 à la position pour laquelle il prend contact avec le sol de la Figure 1, sous l'action vers le bas du vérin 16$_A$–16$_B$, on voit que le rouleau va exercer sur le sol une pression d'autant plus importante que la pression dans la partie haute de vérin 16$_A$ sera plus importante et que le système d'amortissement mécanique 15$_A$–15$_B$ sera plus comprimé par le fait que l'action exercée par le vérin va provoquer le pivotement du cadre 3 portant le rouleau 1 autour de l'axe antérieur 11$_A$–11$_B$ et la compression du système d'amortissement 15$_A$–15$_B$.

Il apparaît immédiatement que la pression exercée au sol par le rouleau 1 est obtenue, sous l'action des vérins, par prélèvement du poids du tracteur 7 et que, ledit rouleau étant disposé sensiblement au voisinage du centre de gravité de ce dernier, cela permet une répartition optimale des masses.

Conformément aux figures, le conducteur du tracteur a à sa disposition un système de commande comprenant: un distributeur 21 de la pression du circuit hydraulique qui est comprise entre 170 et 220 bars suivant le type de tracteur dont il s'agit, une vanne 22 et un manomètre 23.

Suivant un montage possible et non limitatif, le distributeur 21 est, d'une part, relié directement par une canalisation 24 à la partie basse du vérin 16$_A$–16$_B$; d'autre part, relié, en parallèle, d'un côté, à la partie haute du vérin 16$_A$–16$_B$ par une canalisation 25$_A$, de l'autre côté, par une canalisation 25$_B$ à un accumulateur à azote 26 qui est, par exemple, fixé à la partie supérieure de l'un des brancards, 4$_A$ en l'occurrence, de l'attelage 4 du rouleau. La vanne 22 est insérée dans la tubulure 25 à la sortie du distributeur 21 tandis que le manomètre 23 permet de mesurer la pression dans l'accumulateur à azote 26 qui est d'ailleurs sensiblement la même que celle régnant dans la partie haute du vérin 16$_A$–16$_B$. Il est bien évident en effet que les deux vérins 16$_A$–16$_B$ sont montés en tandem et fonctionnent rigoureusement de la même façon.

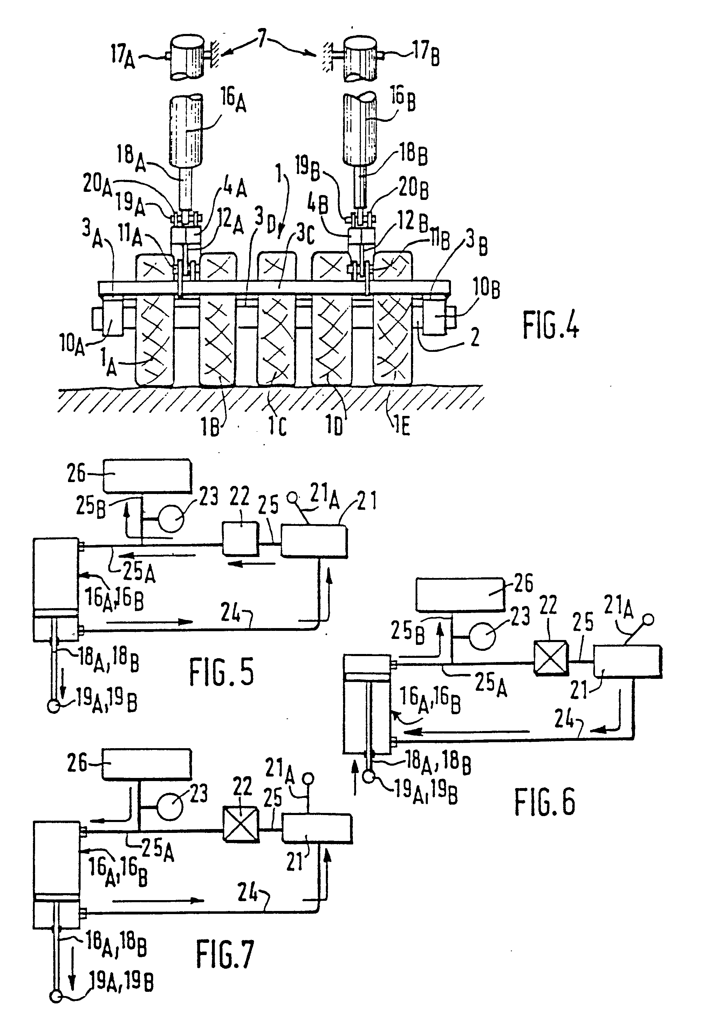

On va maintenant décrire, en se référant plus particulièrement aux Figures 5, 6 et 7, le fonctionnement de l'ensemble hydraulique de manœuvre et de son système de commande, à la disposition du conducteur, durant les trois phases principales de son cycle de fonctionnement.

1° Mise en pression du circuit d'amortissement à accumulateur à azote, normalement avant le début du travail (figure 5).

L'opérateur, après avoir ouvert la vanne 22, manipule le levier 21$_A$ du distributeur 21 pour envoyer la pression, tout à la fois dans la partie haute du vérin 16$_A$–16$_B$ et dans l'accumulateur à azote 26.

Lorsque le rouleau 1 vient au contact du sol, la pression augmente, tant dans le vérin que dans l'accumulateur 26 qui provoque, à partir de la pression définie en fonction de l'équilibre des masses désiré, la compression de l'azote, tandis que le système d'amortissement mécanique 15$_A$ est mis en compression.

Lorsque la pression désirée, lue sur le manomètre 23, est atteinte, l'opérateur ferme la vanne 22, ce qui a pour effet de bloquer l'ensemble hydraulique en l'état.

Bien entendu, cette pression est déterminée en fonction de la pression que doit exercer le rouleau sur le sol à traiter, compte tenu de sa nature, de la pression dans les pneumatiques 1$_A$.. 1$_E$ et autres paramètres inhérents au tracteur aux fins d'obtenir une répartition optimale des masses.

2° Remontée du rouleau en position d'escamotage pour le transport (figure 6).

Pour ce faire, l'opérateur actionne le levier 21$_A$ du distributeur 21 pour envoyer la pression dans la partie basse du vérin 16$_A$, 16$_B$.

Le piston du vérin remonte et la vanne 22 étant fermée, il apparaît immédiatement que c'est l'accumulateur 26 qui emmagasine l'huile contenue dans la partie haute de vérin ce qui a pour effet d'augmenter la pression dans ledit accumulateur. L'ensemble du rouleau 1 et de son attelage 4 est maintenu en position haute d'escamotage par le vérin 16$_A$–16$_B$ en position haute durant toute la période de transport.

3° Mise en place du rouleau pour le travail au champ (figure 7).

Lorsque le tracteur a été amené à sa position initiale pour instaurer le travail de préparation du sol au champ, l'opérateur a simplement à amener le levier 21$_A$ du distributeur 21 en position flottante, la vanne 22 restant toujours en position de fermeture.

L'accumulateur à azote 26 se trouvant en surpression restitue l'huile dans la partie haute du vérin 16$_A$, 16$_B$ en repoussant le piston vers sa position basse à la pression initialement affichée sur le manomètre 23, lors de la première phase de mise en pression du circuit d'amortissement précédemment décrite.

Bien évidemment, l'appareil rend possible au conducteur, si cela s'avère nécessaire au cours du travail, de modifier la valeur de la pression exercée au sol par le rouleau en procédant momentanément comme il a été décrit précédemment au sujet de la phase de mise en pression du circuit d'amortissement.

Il va de soi que la présente invention n'a été décrite et représentée qu'à titre d'exemple préférentiel nullement limitatif et qu'on pourra y apporter des équivalences techniques sans pour autant sortir du cadre de ladite invention, tel que défini dans les revendications annexées.

C'est ainsi, en particulier, que le rouleau peut être constitué autrement que par des roues jumelées à pneumatiques, comme par exemple une herse rotative, ou un rouleau métallique plein ou tout autre type connu de rouleau.

Le tracteur n'étant encombré, ni à l'avant, ni à l'arrière, contrairement aux montages actuellement connus où le rouleau est placé soit à l'arrière, soit à l'avant du tracteur, on peut monter sur ledit tracteur tout autre appareil complémentaire convenable soit à l'avant, soit à l'arrière, soit, encore, à l'avant et à l'arrière.

Par ailleurs, le rouleau exerçant son travail sous le tracteur et sensiblement à hauteur du centre de gravité de ce dernier, le poids du tracteur est parfaitement réparti, ce qui permet d'augmenter dans des proportions appréciables l'efficacité de la préparation du sol, par rapport aux systèmes actuellement connus.

Selon une variante non représentée, l'attelage reliant le rouleau au châssis comporte un cadre, fermé ou non, articulé autour d'un premier axe transversal horizontal sur une structure intermédiaire elle-même articulée à sa partie basse, autour d'un second axe transversal horizontal, à une structure rapportée au châssis du tracteur. Un premier jeu de vérins contrôle la position angulaire du cadre par rapport à la structure intermédiaire et un second jeu de vérins, agissant au-dessus du second axe transversal, contrôle la position angulaire de cette structure intermédiaire par rapport au châssis du tracteur; chacun de ces jeux de vérins assume l'une des deux fonctions du système hydraulique de commande de l'invention. La conception de ce dernier s'en trouve simplifiée. Des butées sont avantageusement prévues pour limiter le débattement angulaire de la structure intermédiaire par rapport au châssis.

**Revendications**

1. Appareil perfectionné pour la préparation des sols au moyen d'un rouleau transversal monté sur un tracteur, destiné à aplanir le sol de façon aussi régulière que possible entre les traces des roues du tracteur, dans lequel le rouleau (1) est tiré par un attelage (4) relié au châssis (6) en sorte d'être disposé sous le tracteur en arrière de ses roues avant ($7_B$), et est par ailleurs soumis à l'action d'un système hydraulique de manœuvre (9) à vérins ($16_A$, $16_B$) contrôlé par un système de commande agencé pour permettre au conducteur d'amener le rouleau à venir occuper, soit une position haute de transport, soit une position basse de travail pour laquelle la pression exercée au sol par le rouleau (1) est obtenue par prélèvement du poids du tracteur, caractérisé en ce que le rouleau (1) est situé sensiblement sous le centre de gravité du tracteur, ce qui permet une répartition optimale des masses, et en ce que le système de commande comporte un circuit d'amortissement à accumulateur d'azote (26) relié à l'extrémité de poussée de deux vérins ($16_A$, $16_B$) du système hydraulique de manœuvre agissant sur le rouleau, ce circuit comportant, outre cet accumulateur (26) et un manomètre (23) permettant d'en afficher la pression, une vanne (22) adaptée à connecter en parallèle cette extrémité de poussée des vérins et cet accumulateur (26) au distributeur (21) de pression du tracteur, grâce à quoi ce système de commande est adapté à un préréglage de la pression exercée par le rouleau sur le sol, avant le travail par ouverture de la vanne (22), par mise en pression du circuit d'amortissement et de l'extrémité de poussée des vérins jusqu'à obtention d'une pression désirée, puis fermeture de la vanne, ainsi qu'à une application automatique de cette pression de préréglage sur le rouleau lorsque ce dernier est mis en place sur le sol pour le travail au sol, l'accumulateur (26) emmagasinant l'huile refoulée à l'extrémité de poussée des vérins en position haute de transport, et la restituant à cette extrémité en position basse.

2. Appareil selon la revendication 1, caractérisé en ce que le rouleau (1) est logé dans un cadre rectangulaire (3) disposé transversalement et sous le ventre du tracteur (7), dont les côtés latéraux ($3_A$, $3_B$) portent les roulements ($10_A$, $10_B$) de l'essieu (2) du rouleau, dont le côté avant ($3_C$) s'articule sur deux brancards latéraux ($4_A$, $4_B$) venant s'articuler eux-mêmes, à leur extrémité avant (5), sur la partie avant du châssis (6) du tracteur, et dont les extrémités arrières sont reliées, au moyen d'amortisseurs latéraux ($15_A$), avec le côté arrière libre ($3_D$) du cadre portant le rouleau.

3. Appareil selon la revendication 2, caractérisé en ce que l'ensemble hydraulique de manœuvre (9) est constitué de deux latéraux double effet ($16_A$, $16_B$) articulés, d'une part, à l'une de leurs extrémités ($17_A$, $17_B$) sur un élément adéquat du tracteur (7), d'autre part, à leur autre extrémité ($19_A$, $19_B$) sur lesdits brancards ($4_A$, $4_B$) sur lesquels s'articule le côté avant ($3_C$) du cadre porte rouleau.

4. Appareil selon la revendication 3, caractérisé en ce que le distributeur (21) de pression du tracteur est par ailleurs relié directement (24) à l'autre extrémité des vérins, grâce à quoi l'application de la pression délivrée par ce distributeur à cette autre extrémité provoque la remontée du rouleau, tandis que la mise de ce distributeur en position flottante permet la descente de ce rouleau en position basse avec restitution de l'huile emmagasinée dans l'accumulateur.

5. Appareil selon la revendication 4, caractérisé en ce qu'un organe est prévu, dans le cas où le travail en cours le nécessite, pour permettre au conducteur de revenir momentanément à la première phase en ouvrant la vanne (22) jusqu'à l'obtention d'une nouvelle valeur désirée de la pression dans l'accumulateur à azote (26), puis en refermant la vanne.

6. Appareil selon la revendication 1, caractérisé en ce que l'attelage comporte une structure intermédiaire à laquelle est articulé le cadre dans lequel est engagé le rouleau et une structure rapportée au châssis à laquelle cette structure intermédiaire est articulée, et que le système hydraulique de manœuvre comporte un premier jeu de vérins contrôlant la position angulaire du cadre par rapport à la structure intermédiaire et un second jeu de vérins contrôlant la position angulaire de cette structure intermédiaire par rapport au châssis du tracteur.

7. Appareil selon la revendication 6, caractérisé en ce que des butées sont prévues pour limiter le débattement de la structure intermédiaire par rapport au châssis.

**Patentansprüche**

1. Gerät zur Bodenbereitung mit einer an einem Traktor befestigten Querwalze für ein möglichst gleichmäßiges Planieren des Bodens zwischen den Radspuren des Traktors, wobei die Walze (1) von einem am Traktorrahmen (6) befestigten Zuggeschirr (4) gezogen wird, dabei unter dem Traktor hinter dessen Vorderrädern (7$_B$) liegt und außerdem der Einwirkung eines mittels Zylindern (16$_A$, 16$_B$) betriebenen hydraulischen Betätigungssystems (9) unterliegt, das von einem Steuersystem kontrolliert wird, das es dem Traktorfahrer gestattet, die Walze sowohl eine angehobene Transportstellung, wie auch eine abgesenkte Arbeitsstellung einnehmen zu lassen, wobei für letztere der Druck den die Walze (1) auf den Boden ausübt, durch eine entsprechende Ableitung des Traktorgewichts erhalten wird, dadurch gekennzeichnet, daß die Walze (1) genau unterhalb des Massenschwerpunkts des Traktors liegt, was eine optimale Massenverteilung zuläßt, und daß das Steuersystem einen Dämpfungskreis mit Stickstoff-Speicher (26) aufweist, der an das ausfahrseitige Ende der beiden Zylinder (16$_A$, 16$_B$) des auf die Walze wirkenden hydraulischen Betätigungssystems angeschlossen ist und außer diesem Speicher (26) und einem Manometer (23) für dessen Druckanzeige noch ein Ventil (22) zum parallelen Anschluß des ausfahrseitigen Endes der Zylinder und des Speichers (26) an den Druckverteiler (21) des Traktors aufweist, wodurch das Steuersystem in der Lage ist, eine Voreinstellung des von der Walze auf den Boden ausgeübten Drucks vor der Arbeit durch Öffnen des Ventils (22), durch Druckbeaufschlagung des Dämpfungskreises sowie des ausfahrseitigen Endes der Zylinder bis zum Erhalt des gewünschten Druckes und durch anschließendes Schließen des Ventils sowie auch eine automatische Beaufschlagung der Walze mit diesem voreingestellten Druck zu bewirken, wenn die Walze in ihre Arbeitslage am Boden gebracht ist, wobei der Speicher (26) das am ausfahrseitigen Zylinderende ausgestoßene Öl bei angehobener Transportstellung der Walze aufnimmt und es bei abgesenkter Arbeitsstellung der Walze an dieses Ende der Zylinder wieder abgibt.

2. Gerät nach Anspruch 1, dadurch gekennzeichnet, daß die Walze (1) in einem rechtwinkeligen, quer unter der Unterseite des Traktors (7) angebrachten Walzentragrahmen (3) aufgenommen ist, dessen Seitenholme (3$_A$, 3$_B$) die Lager (10$_A$, 10$_B$) der Walzenachse (2) tragen und dessen Vorderholm (3$_C$) an zwei seitlichen Deichseln (4$_A$, 4$_B$) verschwenkbar gelagert ist, die ihrerseits mit ihrem vorderen Ende (5) am vorderen Bereich des Traktorrahmens (6) verschwenkbar befestigt und deren hintere Enden über seitliche Dämpfer (15$_A$) mit dem hinteren freien Holm (3$_D$) des Walzentragrahmens verbunden sind.

3. Gerät nach Anspruch 2, dadurch gekennzeichnet, daß das hydraulische Betätigungsaggregat (9) von zwei doppelt wirkenden, seitlichen Hydraulikzylindern (16$_A$, 16$_B$) gebildet wird, die einerseits an einem ihrer Enden (17$_A$, 17$_B$) an einem geeigneten Teil des Traktors (7) und andererseits an ihrem anderen Ende (19$_A$, 19$_B$) an den Deichseln (4$_A$, 4$_B$), an denen der Vorderholm (3$_C$) des Walzentragrahmens angelenkt ist, verschwenkbar befestigt sind.

4. Gerät nach Anspruch 3, dadurch gekennzeichnet, daß der Druckverteiler (21) des Traktors ferner direkt (24) am anderen Ende der Hydraulikzylinder angeschlossen ist, wodurch dessen Beaufschlagung mit vom Verteiler geliefertem Druck das Anheben der Walze auslöst, wogegen die Einstellung des Verteilers in geflutete Stellung ein Wiederabsenken der Walze in deren Arbeitslage mit Rückführung des im Dämpfer zwischengespeicherten Öls gestattet.

5. Gerät nach Anspruch 4, dadurch gekennzeichnet, daß ein Organ vorgesehen ist, das es im Fall einer Notwendigkeit bei laufender Arbeit dem Fahrer ermöglicht, augenblicklich in die erste Phase zurückzuschalten, indem das Ventil (22) bis zum Erreichen eines neuen gewünschten Druckwertes im Stickstoff-Speicher (26) öffnet und hiernach das Ventil wieder schließt.

6. Gerät nach Anspruch 1, dadurch gekennzeichnet, daß das Zuggeschirr eine Zwischenstruktur, an welcher der Walzentragrahmen verschwenkbar angelenkt ist, sowie eine weitere Struktur aufweist, die mit dem Rahmen verbunden und an der die Zwischenstruktur verschwenkbar befestigt ist, und dass das hydraulische Betätigungssystem ein erstes Ausfahrspiel der hydraulischen Zylinder zur Einstellung der Winkellage des Walzentragrahmens relativ zur Zwischenstruktur und ein zweites Ausfahrspiel der hydraulischen Zylinder zur Einstellung der Winkellage der Zwischenstruktur relativ zum Rahmen des Traktors aufweist.

7. Gerät nach Anspruch 6, dadurch gekennzeichnet, daß Anschläge zur Begrenzung der Verschwenkbewegung der Zwischenstruktur relativ zum Rahmen des Traktors vorgesehen sind.

**Claims**

1. An improved device for preparing the ground by means of a transverse roller mounted on a tractor, adapted to flatten the ground in as uniform a manner as possible between the tracks of the wheels of the tractor, in which the roller (1) is pulled by a coupling (4) connected to the chassis (6) so that it is disposed underneath the tractor behind its front wheels (7$_B$), and the roller moreov-

er is subjected to the action of a hydraulic operating system (9) which uses jacks ($16_A$, $16_B$) controlled by a control system adapted to allow the driver to move the roller to occupy either a raised transporting position or a lowered working position in which the pressure exerted on the ground is derived from the weight of the tractor, characterized in that the roller is situated substantially below the centre of gravity of the tractor, which permits an optimal distribution of the masses, and in that the control system comprises a damping circuit having a nitrogen storage vessel (26) connected to the thrust end of the two jacks ($16_A$, $16_B$) of the hydraulic operating system (9) acting on the roller, this circuit comprising, in addition to this storage vessel and a manometer (23) allowing its pressure to be displayed, a valve (22) adapted to connect this thrust end of the jacks and this storage vessel (26) in parallel to the pressure distributor (21) of the tractor, as a result of which the control system is adapted to allow preset control of the pressure exerted by the roller on the ground before work begins by opening the valve (22), then applying a pressure to the damping circuit and the thrust end of the jacks until a chosen pressure is obtained, then closing the valve, and it is also adapted to automatic application of this preset pressure on the roller when the latter is placed on the ground to work on the ground, the storage vessel (26) storing the oil driven back at the thrust end of the jacks in the raised transporting position and restoring it at this end in the lowered position.

2. A device according to Claim 1, characterized in that the roller (1) is housed in a rectangular frame (3) disposed transversely under the tractor body (7) the lateral sides ($3_A$, $3_B$) of which frame carry roller bearings ($10_A$, $10_B$) for the axle (2) of the roller, and the front side ($3_C$) of which frame is articulated on two lateral shafts ($4_A$, $4_B$) which are themselves articulated at their front ends (5) on the front part of the tractor chassis (6), and the rear ends of which are connected, by means of lateral dampers ($15_A$) to the free rear end ($3_D$) of the frame carrying the roller.

3. A device according to Claim 2, characterized in that the hydraulic operating assembly (9) consists of two lateral double action jacks ($16_A$, $16_B$) articulated, on the one hand, at one of their ends ($17_A$, $17_B$) on a suitable element of the tractor (7) and, on the other hand, at their other ends ($19_A$, $19_B$) on the said shafts ($4_A$, $4_B$) on which the front side ($3_C$) of the roller-carrying frame is articulated.

4. A device according to Claim 3, characterized in that the pressure distributor (21) of the tractor is also directly connected (24) to the other end of the jacks, as a result of which the application of the pressure delivered by this distributor to this other end causes the roller to rise, whereas putting this distributor in the neutral position allows the roller to descend into the lowered position with restoration of the oil stored in the storage vessel.

5. A device according to Claim 4, characterized in that a component is provided, where the work in progress requires it, to allow the driver to return temporarily to the first phase by opening the valve (22) until a new chosen pressure value is obtained in the nitrogen storage vessel (26), then closing the valve.

6. A device according to Claim 1, characterized in that the coupling (4) comprises an intermediate structure to which the frame in which the roller is engaged is articulated, and a structure, attached to the chassis, to which this intermediate structure is articulated, and in that the hydraulic operating system comprises a first set of jacks controlling the angular position of the frame relative to the intermediate structure and a second set of jacks controlling the angular position of this intermediate structure relative to the chassis of the tractor.

7. A device according to Claim 6, characterized in that stops are provided to limit movement of the intermediate structure relative to the chassis.

FIG.1

FIG.2

FIG. 3

EP 0 199 656 B1

FIG.4

FIG.5

FIG.6

FIG.7